# EUROPEAN PATENT SPECIFICATION

(11) **EP 3 005 113 B1**
(45) Date of publication and mention of the grant of the patent: **03.05.2017**
(21) Application number: 14736086.1
(22) Date of filing: 28.05.2014
(51) Int. Cl.: G06F 3/06, G06F 9/455, G06F 9/50

(54) **IMPROVED DEPLOYMENT OF VIRTUAL MACHINES BY MEANS OF DIFFERENCING DISKS**
VERBESSERTE IMPLEMENTIERUNG VON VIRTUELLEN MASCHINEN MITTELS DIFERENZIELLER VIRTUELLER FESTPLATTEN
DÉPLOIEMENT AMÉLIORÉ DE MACHINES VIRTUELLES AU MOYEN DE DISQUES DE DIFFÉRENCE

(30) Priority: 31.05.2013 US 201361829710 P; 17.06.2013 US 201313919895
(43) Date of publication of application: 13.04.2016
(73) Proprietor: Microsoft Technology Licensing, LLC, Redmond, WA 98052 (US)
(72) Inventor: MESSEC, John Anthony, Redmond, Washington 98052-6399 (US); SIVA DASAN, Sumit, Redmond, Washington 98052-6399 (US); SUN, Yi, Redmond, Washington 98052-6399 (US); WU, Bo, Redmond, Washington 98052-6399 (US); GIBSON, Robert S.T., Redmond, Washington 98052-6399 (US)
(74) Representative: Grünecker Patent- und Rechtsanwälte PartG mbB
(86) International application number: PCT/US2014/039655
(87) International publication number: WO 2014/193879

(56) References cited:
- US-A1- 2008 155 223
- US-A1- 2009 172 666
- US-A1- 2010 257 523
- US-A1- 2010 262 974
- US-A1- 2012 042 311
- US-A1- 2012 102 199
- US-B1- 7 577 722
- US-B1- 8 091 084
- US-B1- 8 171 201

## Description

### BACKGROUND

### Background and Relevant Art

Computers and computing systems have affected nearly every aspect of modern living. Computers are generally involved in work, recreation, healthcare, transportation, entertainment, household management, etc.

Further, computing system functionality can be enhanced by a computing systems ability to be interconnected to other computing systems via network connections. Network connections may include, but are not limited to, connections via wired or wireless Ethernet, cellular connections, or even computer to computer connections through serial, parallel, USB, or other connections. The connections allow a computing system to access services at other computing systems and to quickly and efficiently receive application data from other computing system.

Interconnection of computing systems has facilitated distributed computing systems, such as so-called "cloud" computing systems. In this description, "cloud computing" may be systems or resources for enabling ubiquitous, convenient, on-demand network access to a shared pool of configurable computing resources (e.g., networks, servers, storage, applications, services, etc.) that can be provisioned and released with reduced management effort or service provider interaction. A cloud model can be composed of various characteristics (e.g., on-demand self-service, broad network access, resource pooling, rapid elasticity, measured service, etc.), service models (e.g., Software as a Service ("SaaS"), Platform as a Service ("PaaS"), Infrastructure as a Service ("IaaS"), and deployment models (e.g., private cloud, community cloud, public cloud, hybrid cloud, etc.).

Distributed deployment of virtual machines (VMs), particularly in large-scale environments, can consume massive storage and network resources.

The subject matter claimed herein is not limited to embodiments that solve any disadvantages or that operate only in environments such as those described above. Rather, this background is only provided to illustrate one exemplary technology area where some embodiments described herein may be practiced.

### BRIEF SUMMARY

One embodiment illustrated herein includes a method that may be practiced in a virtualized network computing environment. The method includes acts for determining host machines on which to place a virtual machine. The method includes determining that a virtual machine to be deployed to a host will use a differencing disk chain based off of one or more base disks. One or more hosts are identified having the one or more base disks already available to the one or more hosts. One of the one or more hosts is selected at which to place the virtual machine based on the one or more hosts having the one or more base disks already available to the one or more hosts. The virtual machine is placed at the selected host.

In another embodiment a method may be practiced in a virtualized network computing environment. The method includes acts for provisioning a disk for a virtual machine. The method includes for a virtual machine to be deployed to a host, determining that the host already has available to the host one or more base disks that can be used as one or more base disks for a disk to be provisioned for the virtual machine. As a result, the method further includes determining to not copy the disk to be provisioned for the virtual machine to the host. A differencing disk is created using the one or more base disks to provision the disk for the virtual machine at the host.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not therefore to be considered to be limiting in scope, embodiments will be described and explained with additional specificity and detail through the use of the accompanying drawings in which:
Figure 1 illustrates a virtualization fabric where a parent disk is available on a host machine to which a virtual machine is to be deployed;
Figure 2 illustrates a virtualization fabric where a parent disk is available to a set of host machines to which a virtual machine may be deployed;
Figure 3 illustrates a logical flow for determining whether or not to copy a base disk to a host;
Figure 4 illustrates a method for determining host machines on which to place a virtual machine; and
Figure 5 illustrates a method for provisioning a disk for a virtual machine.

### DETAILED DESCRIPTION

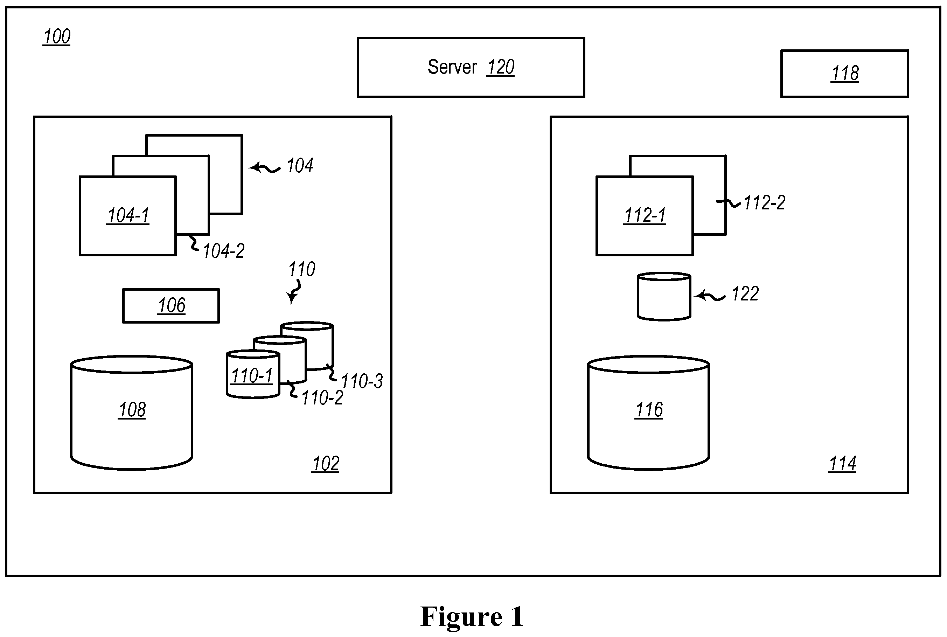

Virtualization of computing functionality is becoming more and more widespread. In virtualization scenarios, physical hardware supports virtual hardware. For example, a physical host machine can host a number of different virtual machines by allocating physical resources of the physical machine to virtual machines hosted on a physical host machine. For example, Figure 1 illustrates a host machine 102 which hosts a set 104 of virtual machines. The host machine 102 includes physical hardware such as processing hardware, memory, storage, etc. The host machine 102 can allocate physical resources of the host machine to software based virtual machines. In some embodiments, this may be done by use of a hypervisor 106 that coordinates resource allocation and maintains separation between the virtual machines in the set 104 of virtual machines.

Often, within a virtualization fabric 100, there may be some desire to deploy and/or move virtual machines within the fabric 100. Additionally, often, virtual machines have some basic similarities, but also include some specialized features. For example, each virtual machine in a set of different virtual machines may have the same operating system, drivers, and some common software installed. However, the virtual machines may each have some individualized software installed the differentiates each machine from each other.

Virtual machines may use differencing disks for storage. A differencing disk is a virtual hard disk used to isolate changes to a virtual hard disk or the guest operating system by storing the changes in a separate file. A differencing disk is associated with another virtual hard disk that is selected when creating the differencing disk. This virtual hard disk is called the "parent" disk and the differencing disk is the "child" disk. The parent disk can be any type of virtual hard disk. The differencing disk stores all changes that would otherwise be made to the parent disk if the differencing disk was not being used. The differencing disk provides an ongoing way to save changes without altering the parent disk. The differencing disk expands dynamically as data is written to it and can grow as large as the maximum size allocated for the parent disk when the parent disk was created.

Figure 1 illustrates an example of a parent disk 108 and a set 110 of differencing disks at the host 102. Thus, the parent disk 108 includes some initial state of data, and changes to the data are stored in one or more of the differencing disks in the set 110. However, once a differencing disk is created off of the parent disk 108, changes are no longer made to the parent disk 108. Otherwise data inconsistencies could occur. For example, assume that the virtual machine 104-1 uses the differencing disk 110-1 and that the virtual machine 104-2 uses the differencing disk 110-2. In the illustrated example, any changes made to the data by the virtual machine 104-1 would be made to the differencing disk 110-1. If changes were made directly to the parent disk 108, this would alter data state for the virtual machine 104-2.

It should be appreciated, however, that chains of differencing disks may be used. For example, a differencing disk may be based off of a set of base disks, which includes a parent disk and one or more differencing disks based off of the parent or another differencing disk. However, once a differencing disk has another differencing disk based off of it, the data on that disk should no longer be changed.

As can be appreciated, by using a differencing disk scheme, a base set of data can be deployed for a virtual machine, followed by deployment of specific data for the virtual machine. This makes deployment and migration of virtual machines easier.

Some embodiments disclosed herein may use differencing disks to reduce both network transfer bandwidth and storage requirements of virtual machines. For example, embodiments may improve network traffic across hosts by utilizing pre-cached and shared base disks for differencing disk chains. Additionally or alternatively, embodiments may improve storage on hosts by utilizing shared base disks for differencing disk chains. Alternatively or additionally, embodiments may share common resources (e.g. base disks) transparently across tenants in a multitenant environment. Alternatively or additionally, embodiments may implement virtual machine placement optimization utilizing availability of pre-deployed cached resources (e.g. base disks) as a placement metric. Alternatively or additionally, embodiments may improve support across full virtual machine lifecycle, including placement, migration, and storage. Alternatively or additionally, embodiments may opportunistically offer near instantaneous deployment (copy part) of virtual machines from a central location (a virtual machine management software library).

Additional details are now illustrated. Embodiments track the identity of virtual machine disks and when a deployment request occurs, attempt to match this resource to an existing resource on the target. If the target already has an existing resource instance that is a binary match, that existing resource is used locally on the target rather than copying over the network. If the resource does not exist, a traditional copy deployment is performed and that resource is marked for improved usage in later deployments. For example, as illustrated in Figure 1, assume that a user wishes to deploy a virtual machine 112-1 to a host 114. The virtual machine 112-1 has some similarities to the virtual machines in the set 104 which use the parent disk 108. At the host 114 is a parent disk 116 that is a binary match to the parent disk 108. Thus, the parent disk 108 does not need to be transferred to the host 114 as part of the deployment of the virtual machine 112-1. Rather, a new differencing disk 122 is created for use by the virtual machine 112-1, where the differencing disk 122 is based off the parent disk 116.

However, if the parent disk 116 had not of existed at the host 114 or had not been a match of the parent disk 108, then the parent disk 108 could have been transferred to the host 114. But, the disk could have then been used to improve deployment of a subsequently deployed virtual machine, such as virtual machine 112-2. In this case, a new differencing disk could be created for subsequently deployed virtual machines.

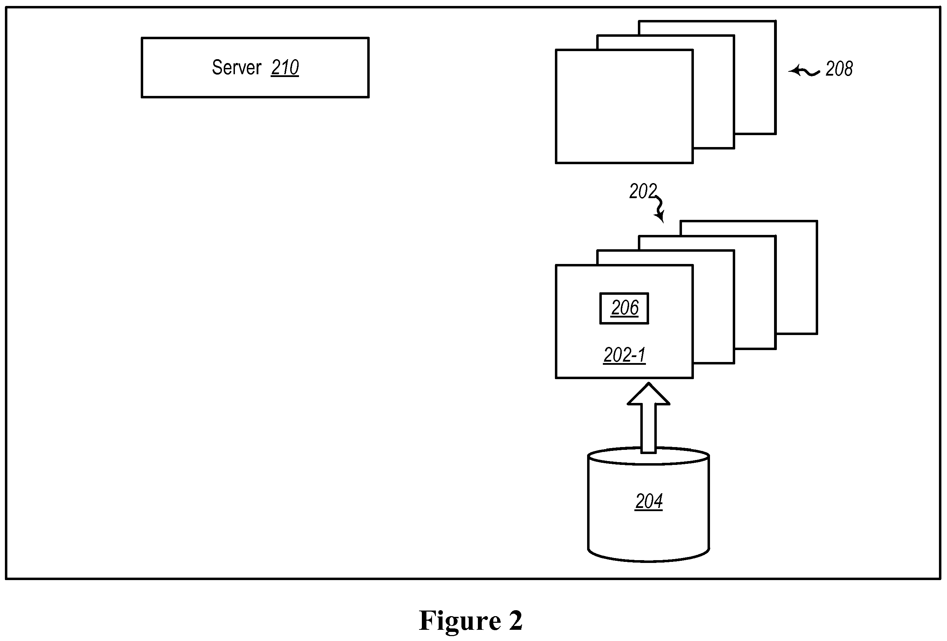

An alternative example is illustrated in Figure 2. Figure 2 illustrates a set 202 of hosts that all share a parent disk 204. The system may wish to deploy a virtual machine 206 that includes storage based on the parent disk 204. The host 202-1, along with the other hosts in the set 202 of hosts has access to the parent disk 204. To deploy the virtual machine 206 to the host 202-1, the data in the parent disk 204 does not need to be copied to the host 202-1 as the host 202-1 already has access to the parent disk 204. However, a new differencing disk may need to be initialized at the host 202-1 for the virtual machine 206.

Thus, embodiments can support sharing of the read-only base disks (such as the parent disk 108 and/or any disks chained to the parent disk), both on a single host as illustrated in Figure 1 and across hosts as will be illustrated in Figure 2 (such as in the case of a shared Server Message Block (SMB) store). Embodiments can track the identity of these base disks and manage creation of differencing disks without duplication of the base disk.

Embodiments may support transparently sharing base disks between tenants in a multi-tenant environment. From the tenant perspective they are working with unique copies; however the underlying implementation will invisibly manage the 'deduplication' of shared base disks in a secure manner.

Some implementations may utilize a rich algorithm for determining the best location(s) for deploying virtual machines. This results in a ranked set of destinations, each with a rating representing the suitability of a given target host or cluster for hosting the virtual machine. This algorithm may account for improved placement of virtual machines utilizing differencing disks. For example, some embodiments may implement host selection algorithms for deployment of virtual machines by factoring in whether or not hosts have an existing copy of base disks on, or available to, a host.

For example, Figure 1 illustrates that the host 114 includes a parent disk 116. However, host 118 does not include the parent disk 116 or a copy thereof. Thus, if a determination were being made as to whether to deploy (or migrate) a virtual machine that included data based on the parent disk 116, the host 114 would be preferred over the host 118, all other factors being equal. Similarly, in Figure 2, the set 202 of hosts have available the parent disk 204 while the set 208 of host do not have the parent disk 204 available. Thus, if a new virtual machine were being deployed that had as part of its deployment, data in the parent disk 204, the hosts in the set 202 would be preferred for deployment (or migration) of the virtual machine over the hosts in the set 208, all other factors being equal.

Differencing disk support for deployment and migration may be particularly useful for hosts where large numbers of virtual machines may be created from a limited subset of base disks. Differencing disk support for deployment and migration may both improve provisioning performance as well as reduce storage requirements. This may be achieved in various ways. The following illustrates additional details of how this can be accomplished.

Embodiments may support improved migration of storage that utilizes differencing disks. In particular a virtual machine management server 120 or 210 (or other virtual machine management software and/or hardware) will attempt to refrain from migrating parent disks when possible by understanding and utilizing duplicate parents in source and target storage. For example, in Figure 1, if the parent disk 108 is the disk to be migrated for deploying virtual machine 112-1 and the parent disk 116 is a duplicate of the parent disk 108, the server 120 can identify this fact, for example, based on disk identifiers, and not migrate the parent disk 108 to the host 114.

Embodiments may improve deployment time by utilizing differencing disks. In particular a virtual machine management server (e.g. sever 120 or 210) or other management software and/or hardware will attempt to identify and utilize differencing disks on the target similar to the migration example above.

Embodiments may improve cloning of virtual machines by utilizing differencing disks In particular a virtual machine management server (e.g. sever 120 or 210) or other management software and/or hardware will have the option to create (possibly temporarily) and utilize differencing disks during a cloning operation.

As noted previously, embodiments may improve placement logic to take advantage of differencing disks. Virtual machine management server (e.g. sever 120 or 210) or other management software and/or hardware placement rules will consider existing cached parent disks when evaluating hosts for placement.

Embodiments may generate differencing disks during distribution of virtual disks. In particular, virtual machine management server (e.g. sever 120 or 210) or other management software and/or hardware can optionally generate a differencing disk from a base virtual machine during deployments.

The approach illustrated centers around the intelligent use of differencing virtual disks. Differencing disks allow multiple disks to be created from a single parent disk (or chain of parent disks). Only the differences between the child disk and the parent are stored, reducing redundancy. Further multiple hosts can share a cache instance. For instance, Host1 and Host2 may both have a cache on an SMB share

### \\fs1\share\vmmCache.

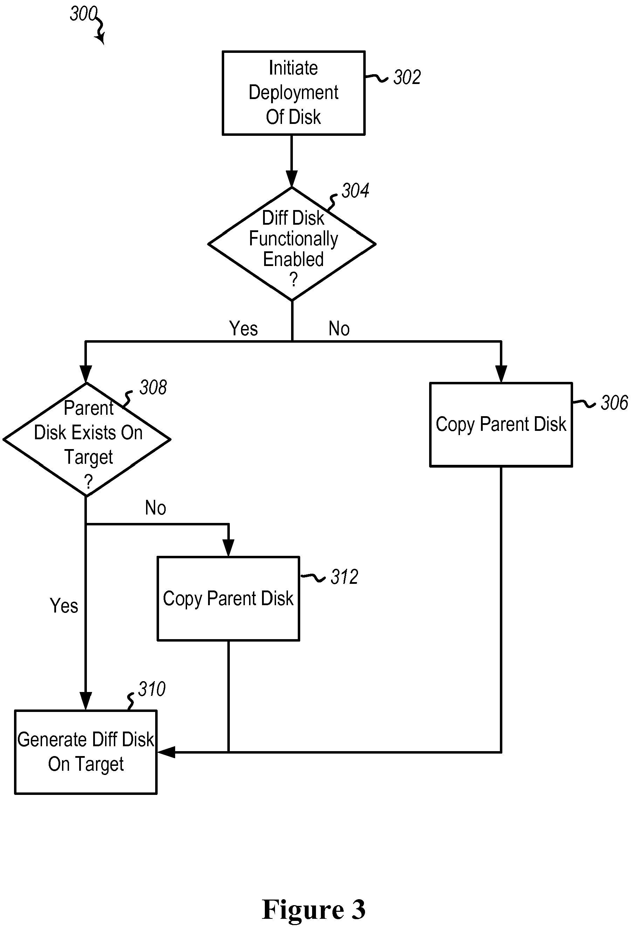

Referring now to Figure 3, a logical flow is illustrated. A disk copy is initiated as illustrated at 302. A check is made to determine if differencing disk functionality is enabled as illustrated at 304. This may be accomplished by setting a flag or some other indicator by an administrator to indicate that embodiments should utilize differencing disk optimization. If the differencing disk functionality is not enabled, then as illustrated at 306, the disk is simply copied to the host. However, if differencing disk functionality is enabled, then as illustrated at 308 a check is made to see if a copy of the source parent disk exists on the target host parent host cache. If a copy of the disk does exist on the host (or is otherwise available to the host), a new differencing disk is then created on the host from the parent disk as illustrated at 310. However, if a copy of the disk does not exist on the host (or is not otherwise available to the host), it is copied over into the cache as illustrated at 312. Once this disk is in the host cache, it is not removed by the virtual machine management server 120 or 210 (or other virtual machine management software and/or hardware). However, guidance may be provided to remove unused disks out of band. A new differencing disk is then created on the host from the parent disk as illustrated at 310. From this logic flow it can be seen that if two instances of a disk are copied to a host, the virtual machine management server 120 or 210 (or other virtual machine management software and/or hardware) will only need to transport the disk once, providing great efficiency in speed and storage.

During the creation of a virtual machine, the option to use differencing disks may be specified on a per-disk level. The ability to select an initial parent path may also be available if the user opts in to the diff disk optimization for the disk.

The user interface used for selecting the parent disk path, in some embodiments, will not be enabled if it is discovered that an existing base disk already exists on the host, but rather the existing path will be displayed read-only.

For a virtual machine that has differencing disk improved disks, migrated parent disks may be placed side-by-side to the child disk or an existing parent on the host will be used.

The following discussion now refers to a number of methods and method acts that may be performed. Although the method acts may be discussed in a certain order or illustrated in a flow chart as occurring in a particular order, no particular ordering is required unless specifically stated, or required because an act is dependent on another act being completed prior to the act being performed.

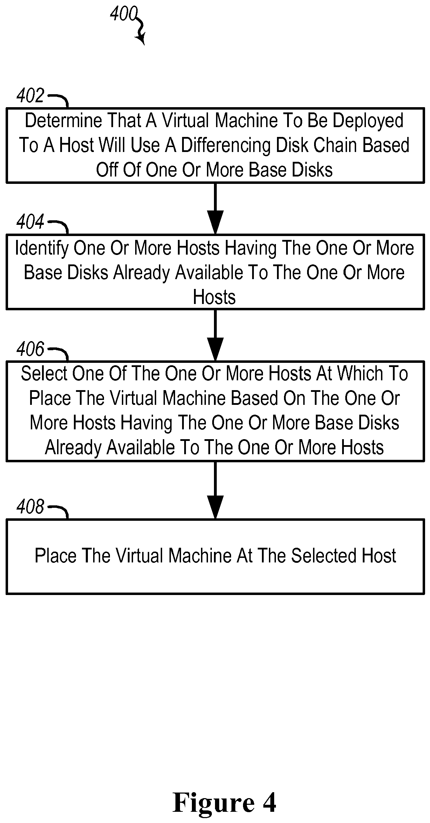

Referring now to Figure 4, a method 400 is illustrated. The method 400 may be practiced in a virtualized network computing environment. The method 400 includes acts for determining host machines on which to place a virtual machine. The method 400 includes determining that a virtual machine to be deployed to a host will use a differencing disk chain based off of one or more base disks (act 402). For example as illustrated in Figure 1, when determining to deploy the virtual machine 112-1, a determination may be made that the virtual machine will use differencing disks based on the parent disk 116. Alternatively as illustrated in Figure 2, deployment of the virtual machine 206 may be based on storage using the parent disk 204.

The method may further include identifying one or more hosts having the one or more base disks already available to the one or more hosts (act 404). For example, in Figure 1, when choosing between hosts 118 and 114, the system may determine that host 114 is more preferred as it already has a copy of the parent disk 116 stored at the parent disk. Alternatively as illustrated in Figure 2, the set 202 of hosts could be identified as having access to the parent disk 204 as opposed to the set 208 of hosts which do not have the parent disk available to them.

The method 400 further includes selecting one of the one or more hosts at which to place the virtual machine based on the one or more hosts having the one or more base disks already available to the one or more hosts (act 406). Thus, as illustrated in Figure 1, the host 114 may be selected in preference to the host 118 and in Figure 2, the host 202-1 may be selected in preference to any of the hosts in the set 208 of hosts.

The method 400 further includes placing the virtual machine at the selected host (act 408). Thus, as illustrated in Figure 1, the virtual machine 112-1 is placed at the host 114, while the virtual machine 206 is placed at the host 202-1.

The method 400 may be practiced where the one or more base disks are stored on a common network share for a plurality of different hosts, such that the one or more base disks can be used as base disks at other hosts. An example of this is illustrated in Figure 2, where the parent disk 204 is available to all of the hosts in the set 202 of hosts.

The method 400 may be practiced where in the one or more base disks are stored on the identified hosts. An example of this is illustrated in Figure 1, where the base disk 116 is stored on the host 114.

The method 400 may be practiced where in the one or more base disks are shared across different tenants in a multi-tenant environment. In some examples of such embodiments, enforcing isolation between tenants may be performed by preventing tenants from modifying or deleting the one or more base disks.

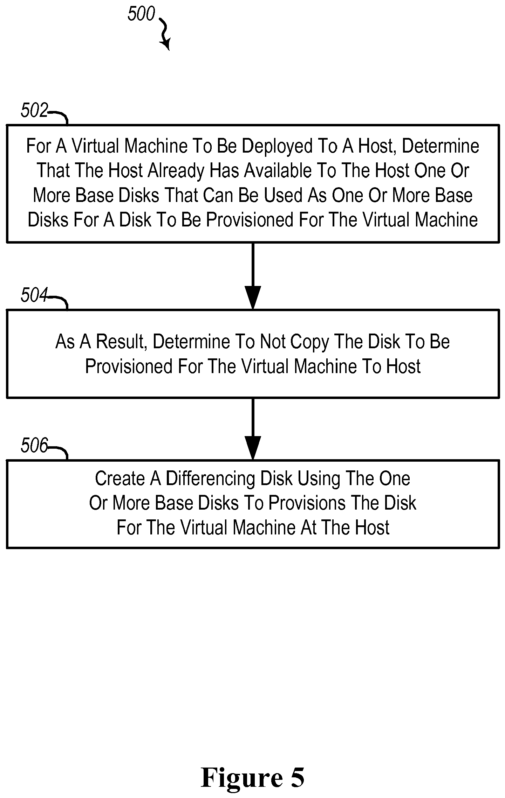

Referring now to Figure 5, a method 500 is illustrated. The method 500 may be practiced in a virtualized network computing environment. The method 500 includes acts for provisioning a disk for a virtual machine. The method 500 includes for a virtual machine to be deployed to a host, determining that the host already has available to the host one or more base disks that can be used as one or more base disks for a disk to be provisioned for the virtual machine (act 502). For example, as illustrated in Figure 1, when deploying the 112-1 to the host 114, a determination can be made that the parent disk 116 is already stored at the host 114. In the example in Figure 2, when deploying the virtual machine 206, a determination can be made that the parent disk 204 is accessible by the host 202-1.

As a result, the method 500 further includes determining to not copy the disk to be provisioned for the virtual machine to the host (act 504) and creating a differencing disk using the one or more base disks to provisions the disk for the virtual machine at the host (act 506). For example, as illustrated in Figure 1, a differencing disk 122 is created on the host 114 for use by the virtual machine 112-1. In Figure 2, a differencing disk 212 is created on the host 202-1 for use by the virtual machine 206.

Further, the methods may be practiced by a computer system including one or more processors and computer readable media such as computer memory. In particular, the computer memory may store computer executable instructions that when executed by one or more processors cause various functions to be performed, such as the acts recited in the embodiments.

Embodiments of the present invention may comprise or utilize a special purpose or general-purpose computer including computer hardware, as discussed in greater detail below. Embodiments within the scope of the present invention also include physical and other computer-readable media for carrying or storing computer-executable instructions and/or data structures. Such computer-readable media can be any available media that can be accessed by a general purpose or special purpose computer system. Computer-readable media that store computer-executable instructions are physical storage media. Computer-readable media that carry computer-executable instructions are transmission media. Thus, by way of example, and not limitation, embodiments of the invention can comprise at least two distinctly different kinds of computer-readable media: physical computer readable storage media and transmission computer readable media.

Physical computer readable storage media includes RAM, ROM, EEPROM, CD-ROM or other optical disk storage (such as CDs, DVDs, etc.), magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry or desired program code means in the form of computer-executable instructions or data structures and which can be accessed by a general purpose or special purpose computer. Combinations of the above are also included within the scope of computer-readable media.

Further, upon reaching various computer system components, program code means in the form of computer-executable instructions or data structures can be transferred automatically from transmission computer readable media to physical computer readable storage media (or vice versa). For example, computer-executable instructions or data structures received over a network or data link can be buffered in RAM within a network interface module (e.g., a "NIC"), and then eventually transferred to computer system RAM and/or to less volatile computer readable physical storage media at a computer system. Thus, computer readable physical storage media can be included in computer system components that also (or even primarily) utilize transmission media.

Computer-executable instructions comprise, for example, instructions and data which cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

## Claims

1. In a virtualized network computing environment, a method of determining host machines on which to place a virtual machine, the method comprising:
determining that a virtual machine to be deployed to a host will use a differencing disk chain based off of one or more base disks;
identifying one or more hosts having the one or more base disks already available to the one or more hosts;
selecting one of the one or more hosts at which to place the virtual machine based on the one or more hosts having the one or more base disks already available to the one or more hosts; and
placing the virtual machine at the selected host.

2. The method of claim 1, wherein in the one or more base disks are stored on a common network share for a plurality of different hosts, such that the one or more base disks can be used as base disks at other hosts.

3. The method of claim 1, wherein in the one or more base disks are stored on the identified hosts.

4. The method of claim 1, wherein in the one or more base disks are shared across different tenants in a multi-tenant environment.

5. The method of claim 4, further comprising enforcing isolation between tenants by preventing tenants from modifying or deleting the one or more base disks.

6. The method of claim 1, wherein identifying one or more hosts having the one or more base disks already available to the one or more hosts comprises identifying base disks that are binary equivalents.

7. The method of claim 1, wherein identifying one or more hosts having the one or more base disks already available to the one or more hosts comprises identifying base disks based on a disk identifiers.

## Patentansprüche

1. In einer virtualisierten Network-Computing-Umgebung, ein Verfahren der Festlegung von Host-Rechnern, auf denen eine virtuelle Maschine platziert werden soll, wobei das Verfahren umfasst:
Festlegung, dass eine virtuelle Maschine, die auf einem Host installiert werden soll, eine differentielle Festplattenkette verwendet, die auf einer oder mehreren Basis-Festplatten basiert;
Identifizieren eines oder mehrerer Hosts, die die eine oder mehreren Basis-Festplatten für den einen oder die mehreren Hosts bereits zur Verfügung haben;
Auswahl eines Hosts aus dem einen oder mehreren Hosts, auf den/die die virtuelle Maschine platziert werden soll, basierend auf den einen oder mehreren Hosts, die die eine oder mehreren Basis-Festplatten für den einen oder die mehreren Hosts bereits zur Verfügung haben; und
Platzieren der virtuellen Maschine auf dem ausgewählten Host.

2. Verfahren nach Anspruch 1, wobei die eine oder mehreren Basis-Festplatten auf einer gemeinsam genutzten Ressource (comon network share) für eine Vielzahl an verschiedenen Hosts gespeichert sind, derart, dass die eine oder mehreren Basis-Festplatten als Basis-Festplatten auf anderen Hosts verwendet werden können.

3. Verfahren nach Anspruch 1, wobei die eine oder mehreren Basis-Festplatten auf den identifizierten Hosts gespeichert sind.

4. Verfahren nach Anspruch 1, wobei die eine oder mehreren Basis-Festplatten unter verschiedenen Mandanten in einer Mehrfach-Mandanten-Umgebung geteilt werden.

5. Verfahren nach Anspruch 4, das des Weiteren eine erzwungene Trennung zwischen Mandanten umfasst, indem Mandanten daran gehindert werden, die eine oder mehreren Basis-Festpiatten zu modifizieren oder zu löschen.

6. Verfahren nach Anspruch 1, wobei das Identifizieren eines oder mehrerer Hosts, die die eine oder mehreren Basis-Festplatten für den einen oder die mehreren Hosts bereits zur Verfügung haben, das Identifizieren von Basis-Festplatten umfasst, die binäre Äquivalente sind.

7. Verfahren nach Anspruch 1, wobei das Identifizieren eines oder mehrerer Hosts, die die eine oder mehreren Basis-Festplatten für den einen oder die mehreren Hosts bereits zur Verfügung haben, das Identifizieren von Basis-Festplatten, basierend auf Festplatten-Kennungen, umfasst.

## Revendications

1. Dans un environnement informatique en réseau virtualisé, procédé de détermination des machines hôtes sur lesquelles doit être placée une machine virtuelle, le procédé comprenant :
la détermination du fait qu'une machine virtuelle à déployer sur un hôte utilisera une chaîne de disques de différenciation sur base d'un ou plusieurs disques de base ;
l'identification d'un ou plusieurs hôtes comportant lesdits un ou plusieurs disques de base déjà disponibles pour lesdits un ou plusieurs hôtes ;
la sélection d'un hôte parmi lesdits un ou plusieurs hôtes sur lequel la machine virtuelle doit être placée sur base desdits un ou plusieurs hôtes comportant lesdits un ou plusieurs disques de base déjà disponibles pour lesdits un ou plusieurs hôtes ; et
le placement de la machine virtuelle sur l'hôte sélectionné.

2. Procédé selon la revendication 1, dans lequel lesdits un ou plusieurs disques de base sont stockés sur un réseau commun partagé par une pluralité d'hôtes différents, de telle sorte que lesdits un ou plusieurs disques de base peuvent être utilisés comme disques de base sur d'autres hôtes.

3. Procédé selon la revendication 1, dans lequel lesdits un ou plusieurs disques de base sont stockés sur les hôtes identifiés.

4. Procédé selon la revendication 1, dans lequel lesdits un ou plusieurs disques de base sont partagés entre différents locataires dans un environnement multi-locataires.

5. Procédé selon la revendication 4, comprenant en outre l'application d'une isolation entre locataires en évitant aux locataires de modifier ou d'effacer lesdits un ou plusieurs disques de base.

6. Procédé selon la revendication 1, dans lequel l'identification d'un ou plusieurs hôtes comportant lesdits un ou plusieurs disques de base déjà disponibles pour lesdits un ou plusieurs hôtes comprend l'identification de disques de base qui sont des équivalents binaires.

7. Procédé selon la revendication 1, dans lequel l'identification d'un ou plusieurs hôtes comportant lesdits un ou plusieurs disques de base déjà disponibles pour lesdits un ou plusieurs hôtes comprend l'identification de disques de base sur base d'identifiants de disque.
